# EUROPEAN PATENT SPECIFICATION

(11) **EP 3 815 933 B1**
(45) Date of publication and mention of the grant of the patent: **12.10.2022**
(21) Application number: 20205494.6
(22) Date of filing: 03.11.2020
(51) Int. Cl.: B60C 25/138, B60B 7/00, B60C 25/05

(54) **PORTABLE TIRE CHANGER SYSTEM FOR KART TIRES**
MOBILES REIFENWECHSELSYSTEM FÜR KARTREIFEN
SYSTÈME PORTABLE DE CHANGEMENT DE PNEUS DE KART

(30) Priority: 04.11.2019 IT 201900020302
(43) Date of publication of application: 05.05.2021
(73) Proprietor: Stabellini, Stefano, 40024 Casalfiumanese (BO) (IT)
(72) Inventor: Stabellini, Stefano, 40024 Casalfiumanese (BO) (IT)
(74) Representative: Cicconetti, Andrea

(56) References cited:
- WO-A1-2007/005892
- DE-A1-102016 208 855
- US-A1- 2018 050 560

## Description

The invention relates to tire changer apparatuses and in particular to a portable tire changer system for go-kart tires. The invention also relates to methods of mounting or dismounting a tire on or from a wheel rim using the aforementioned portable tire changer apparatus.

Tire changer apparatuses are known which allow to mount and/or dismount a tire, or wheel, on/from a respective wheel rim. The tire can be mounted on the wheel rim with or without the introduction of an inner tube. The tire without inner tube, so-called tubeless tire, is mounted on the wheel rim so that the inner edges thereof, called beads, engage and adhere airtightly to the outer and inner edges of the wheel rim.

As is known, the wheel rim can be made by moulding or by casting and typically comprises an axial-symmetrical or external annular channel suitable to receive the tire and provided with two shoulders or side walls which define the depth of the channel and which have shaped edges which are engaged by the tire beads. The wheel rim further comprises at least one internal cavity, so-called well, formed by the channel itself and within which a central fixing disc is provided that is connected to the channel and comprises holes for centring and fixing the wheel rim to the hub of a vehicle wheel is provided. The cavity is defined as internal because it is not visible when the wheel rim is mounted on the vehicle.

Also known are wheel rims, typically for wide racing tires, which comprise, in addition to the internal cavity, an external cavity; the two cavities are separated by the central fixing disc.

There are several types of tire changer apparatuses designed according to the different sizes and types of tires to be dismounted/mounted (light, heavy vehicles, motorcycles, etc.) and the volume of work which they must guarantee. These apparatuses are generally classified as manual, semi-automatic, automatic depending on the number of operations which must be manually carried out by the operator to dismount and remount the tire.

All known tire changer apparatuses comprise a supporting platform or plate, rotatable about a vertical axis and on which the wheel rim can be positioned and fixed generally with the outer edge facing upwards. The outer edge of the wheel rim means the edge visible when the wheel rim is mounted on the vehicle hub, while the inner edge means the edge which is not visible. The two wheel rim edges are coplanar to respective planes orthogonal to a rotation axis of the wheel rim, i.e. of the wheel.

The procedure for dismounting a tire from the wheel rim involves first "beading" the tire, i.e. detaching the beads from the wheel rim edges using a lever or a special pusher which compresses the side of the tire at the wheel rim edge causing the beads to detach. This operation can be carried out before mounting the wheel rim with the tire on the supporting plate, for example by using a special presser device operated manually or by an actuator, or can be performed when the wheel rim is mounted on the supporting plate. In this case, in order to detach the beads along the entire circumference, the tire is rotated together with the supporting plate.

Then, the tire is extracted from the wheel rim by inserting a lever, in the case of manual or semi-automatic tire changers, under the upper or external bead of the tire in order to detach the bead and lift it locally above the outer edge of the wheel rim. Keeping the lever in place, the wheel rim is rotated so that the external bead is completely extracted from the outer edge of the wheel rim. A similar procedure is performed to remove the lower bead of the tire from the wheel rim, using the lever or a pressing device.

The mounting procedure essentially involves the same operations performed backwards, using the lever inserted between the bead and the edge of the wheel rim to insert the two beads of the tire inside the latter, suitably rotating the wheel rim placed on the supporting plate.

The operations above described can be carried out partially or completely automatically by tire changer apparatuses in which, instead of the lever, special devices are used that act on the tire beads to detach them or insert them inside the wheel rim.

These automatic tire changer apparatuses are quite complex, bulky and expensive and are mainly used in the case of high volumes of work, typically in big garages.

In the sector of go-karts or karts, small four-wheel vehicles with tubular steel frame, without suspensions and equipped with internal combustion engines of small power capacity, used in karting (one of the specialities of motor sports), the use of tire changer apparatuses is necessary because the frequent replacement of the tires used, which have very limited durability. These tires, typically having a width of 7.1 inches (18.034 mm) for the rear wheels and 4.5 inches (11.43 cm) for the front wheels, are mounted on light aluminium or magnesium alloy wheel rims with a diameter of 5 or 6 inches (12.7 or 15.24 cm).

For the replacement of these tires, the tire changer apparatuses normally used for light vehicles (cars or motorcycles) cannot be used due to the overall dimensions and weight which make them unsuitable for transport. These apparatuses are also quite expensive. For this reason, portable manual tire changer apparatuses are used, which are not only simpler and cheaper, but also lighter and more compact for an easy transport.

In such tire changer apparatuses, the wheel rim is fixed on a rotating table or base and the tire is dismounted and/or mounted on the wheel rim using a metal working lever which is inserted between the bead of the tire and the edge of the wheel rim both in the dismounting procedure and mounting procedure. The rotation of the table is usually carried out by hand.

One of the disadvantages of such portable tire changer apparatuses is that use of the lever causes scratches, cuts, nicks on the wheel rim, made of light alloy, this causing damage not only aesthetically but also functionally. In some places the edges of the wheel rim can be damaged by the lever (for example deformed) so as to no longer ensure the pressure seal of the tire.

Furthermore, additional scratches and nicks may be caused by the supporting plate, also made of metal, when mounting/dismounting the wheel rim.

In addition to being complex and laborious, the use of the lever in all the steps of the mounting/dismounting procedures of the tire takes time.

WO 2007/005892 discloses an apparatus and methods for mounting and dismounting tires, wherein the apparatus typically comprises a pressing assembly positionable relative to a fixed wheel rim such that the pressing assembly controls force distribution across selected portions of a tire causing a tire bead to be eased onto the wheel rim. The apparatus typically includes an axis of rotation perpendicular to the wheel rim axis and wherein the axis of rotation is positionable in a plane that includes the wheel rim axis. The wheel rim can be fixed to a base assembly and handles allow positioning and transmittal of force to the pressing assembly. A bead breaking assembly for deflating an inflated tire may be provided.

US 2018/050560 discloses a device for protecting the embellished surface of a wheel rim; the device comprises a tool that can be installed on the surface of a wheel rim for the protection of said rim, the tool comprising a circular structure formed in such way as to be held detachably on said wheel rim, the circular structure comprising an inwardly bent contour; the circular structure preferably comprises two semi-annular sub-structures connected by at least one resilient element bringing the two sub-structures closer to each other, said semi-annular sub-structures being held detachably in an adjustable manner on wheel rims of variable dimensions.

DE 102016208855 discloses a tire changer for mounting and/or dismounting a tire on/from a rim comprising a turntable for receiving a rim with or without a tire mounted which has a powder coating. The document discloses also a method for coating a surface of a tire turntable of a tire mounting machine.

An object of the present invention is to improve the known portable tire changer apparatuses, in particular for kart tires.

Another object is to obtain a portable tire changer system which allows to dismount or mount a kart tire without marking, cutting, nicking or damaging the wheel rim thereof.

A further object is to provide a portable tire changer system which allows even an inexperienced user to quickly and easily dismount or mount a kart tire.

Another object is to obtain a compact and lightweight portable tire changer apparatus, easy to transport and at the same time economical, robust and reliable.

In a first aspect of the invention a portable tire changer system according to claim 1 is provided.

In a second aspect of the invention a method for mounting a tire on a respective wheel rim according to claim 11 is provided.

In a third aspect of the invention a method for dismounting a tire from a respective wheel rim according to claim 12 is provided.

The invention can be better understood and implemented with reference to the attached drawings which illustrate an exemplifying and non-limiting embodiment thereof, in which:
- figure 1 is a perspective view of the tire changer apparatus of the portable tire changer system of the invention;
- figure 2 is a perspective view of a front wheel rim for a front kart tire to be mounted on the portable tire changer apparatus of figure 1;
- figure 3 is an enlarged partial view of figure 1 showing in particular supporting means and connecting means of the tire changer apparatus configured for the front wheel rim of figure 2;
- figure 4 is a front, partial and partially sectioned view of the supporting means and connecting means of figure 3 associated with the wheel rim of figure 2;
- figure 5 is an enlarged perspective view of a spacer ring of the connecting means of figures 3 and 4;
- figure 6 is a partial view of the supporting means and connecting means configured for a rear wheel rim for a rear kart tire;
- figure 7 is a perspective view of an auxiliary connecting element of the connecting means of figure 6;
- figure 8 is a front view of the auxiliary connecting element of figure 7;
- figure 9 is a front, partial, and enlarged view of an introducer element of mounting means fixed to the wheel rim in a mounting configuration of a tire;

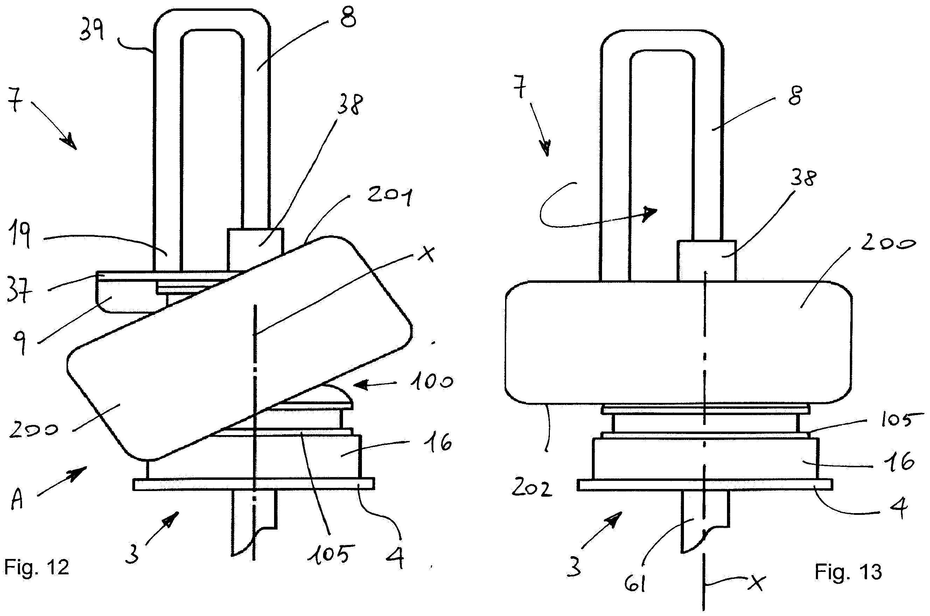

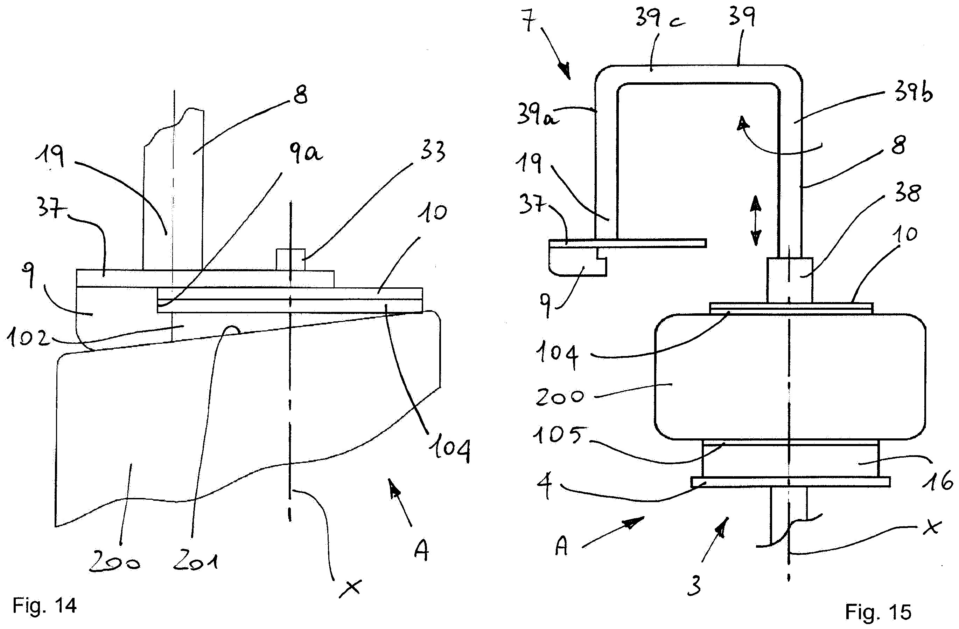

- figures 10 to 15 illustrate respective steps of a procedure for mounting a tire on the wheel rim using the portable tire changer apparatus of figure 1.

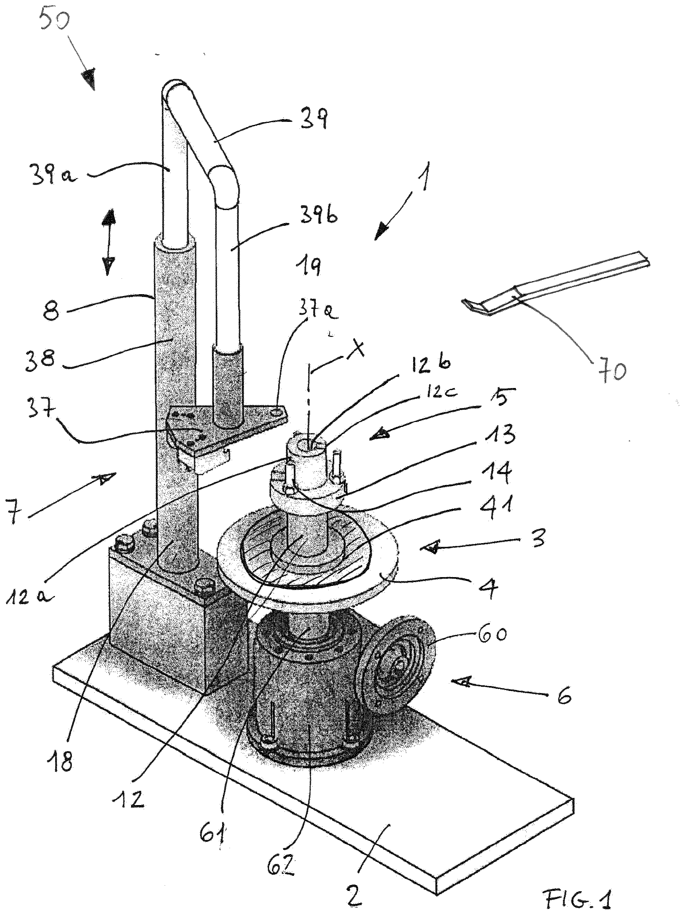

With reference to figures 1 to 9, the portable tire changer system 50 according to the invention for kart tires 200 is illustrated, the kart tires being mounted on metal wheel rims 100, in particular made of light aluminium or magnesium alloy.

Each wheel rim 100, of known type, substantially comprises an annular external or axial-symmetrical channel 101, formed by an external side wall 102 and an inner side wall 103, which respectively have an external annular edge 104 and an inner annular edge 105 suitable to airtightly engage respective an external bead 201 and internal bead 202 of a tire 200. The external channel 101 defines or forms an external cavity 106 and an internal cavity 107 separated by a central disc 108 for fixing to a kart wheel hub. External part of the wheel rim 100 means the part which is visible from the exterior when the wheel rim is mounted on the kart.

The wheel rim 100 for a kart wheel may have different dimensions, in particular different diameter and width of the external channel 101. More precisely, as is known, the wheel rims for front wheels 100 (front wheel rims) and the wheel rims for rear wheels (rear wheel rims) generally both have a diameter of 5 or 6 inches (12.7 or 15.24 cm), but different widths in order to accommodate front tires of 4.5 inches (11.43 cm) in width and rear tires of 7.1 inches (18.034 mm) in width, respectively.

The portable tire changer system 50 comprises a portable tire changer apparatus 1 which in turn comprises a supporting base 2 and supporting means 3 fixed thereto, rotatable about a rotation axis X, for example almost vertical, and comprising a supporting plate 4 and connecting means 5. The supporting plate 4 is provided with a respective layer 41 of non-metallic material, in particular plastic or rubber or the like, and is arranged to support a wheel rim 100 on the inner annular edge 105 thereof.

The connecting means 5, projecting from the supporting plate 4 along the rotation axis X are arranged and configured to be inserted into the internal cavity 107 of the wheel rim 100, when supported by the supporting plate 4, so as to engage centring and fixing holes 110, 111 of the central disc 108 in a mounting configuration A of the wheel rim 100 on the portable tire changer apparatus 1.

The latter also comprises driving means 6 fixed to the supporting base 2 and arranged to rotate the supporting means 3 about the rotation axis X.

The portable tire changer system 50 also comprises a covering element 10 and a working lever 70. The covering element 10 is made of non-metallic material, for example plastic with low friction coefficient, and is configured to engage and cover at least the external annular edge 104 of the wheel rim 100 so as to prevent the latter from being directly abutted and contacted by the working lever 70, of a known type and not described in detail, used to remove a tire 200 from the wheel rim 100 in a dismounting procedure, as better explained below.

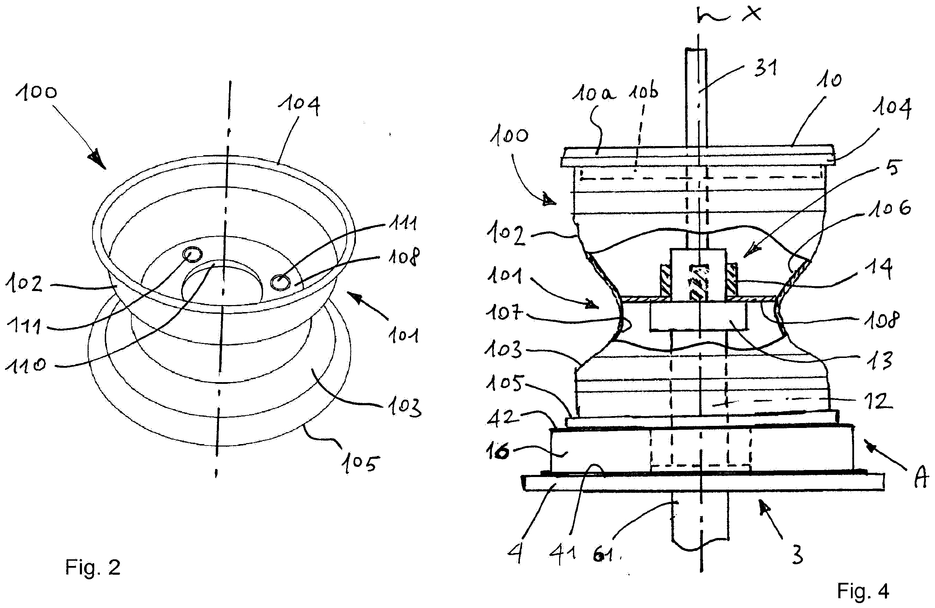

The covering element 10 is substantially shaped like a cap and comprises a first substantially flat portion 10a intended to abut the external annular edge 104 of the wheel rim and a second portion 10b extending from said first portion 10a and configured to be custom-fitted into the external cavity 106 of the wheel rim 200 so as to prevent lateral or radial displacements of the covering element 10 with respect to the wheel rim 100 (figure 4).

The portable tire changer apparatus 1 further includes mounting means 7 comprising a movable arm 8 having a first end 18 connected to the supporting base 2 and a second end 19 movable, and an introducer element 9 fixed thereto, made of non-metallic material, in particular plastic with a low friction coefficient, configured to abut, in a procedure of mounting a tire 200, the external annular edge 104 of the wheel rim 100 to allow the tire 200 to be inserted and mounted by rotating the supporting means 3.

The connecting means 5 comprise a centring pin 12 fixed to the supporting plate 4 and a centring ring 13 inserted in, and fixed to, the centring pin 12 and provided, at a peripheral portion thereof, with a plurality of centring pegs 14.

In the case of a front wheel rim 100 for a front kart wheel, thus having an external channel 101 with smaller width, in the mounting configuration A (figure 4) the centring pin 12, and in particular a free end 12a thereof that is opposite the end fixed to the supporting plate 4, is inserted in a centring hole 110 of the central disc 108 of the wheel rim 100, while the centring pegs 14 are inserted in respective fixing holes 111 of the central disc 108. The free end 12a of the centring pin 12 is provided with a longitudinal outer groove 12c, parallel to the rotation axis X, intended to receive a valve mounted on the wheel rim 100.

Coupling the centring pin 12 with the centring hole 110 ensures that the wheel rim 100 is substantially coaxial with the rotation axis X, while coupling the centring pegs 14 with the fixing holes 111 ensures the rotation of the wheel rim together with the supporting plate, i.e. the transmission of a rotation torque necessary to overcome the resistance to rotation of the wheel rim 100 during the mounting and dismounting of the tire 200.

The centring pin 12 is parallel and coaxial to the rotation axis X and the centring pegs 14 are fixed to the centring ring 3 parallel to the rotation axis X. The number of centring pegs 14 and the angular distance thereof are equal to number and angular distance of the fixing holes 111 of the central disc 108; in the illustrated example, there are three fixing holes 111 and centring pegs 14, angularly spaced by 120°.

The supporting means 3 also comprises a spacer ring 16 which is inserted in the mounting configuration A in the centring pin 12, resting on the supporting plate 4 to support the inner annular edge 105 of the front wheel rim 100 and thus allow the connecting means 5 to couple to the centring holes 110 and 111 of the central disc 108. More precisely, the spacer ring 16 comprises a respective upper face 16a suitable to abut the wheel rim 100, the inner annular edge 105 thereof, and provided with a respective layer 42 of non-metallic material, for example plastic or rubber or the like, so as not to cause scratches, cuts, nicks on the wheel rim 100 (in particular on the inner annular edge 105 thereof), made of light alloy, during the mounting/dismounting thereof on/from the supporting means 3.

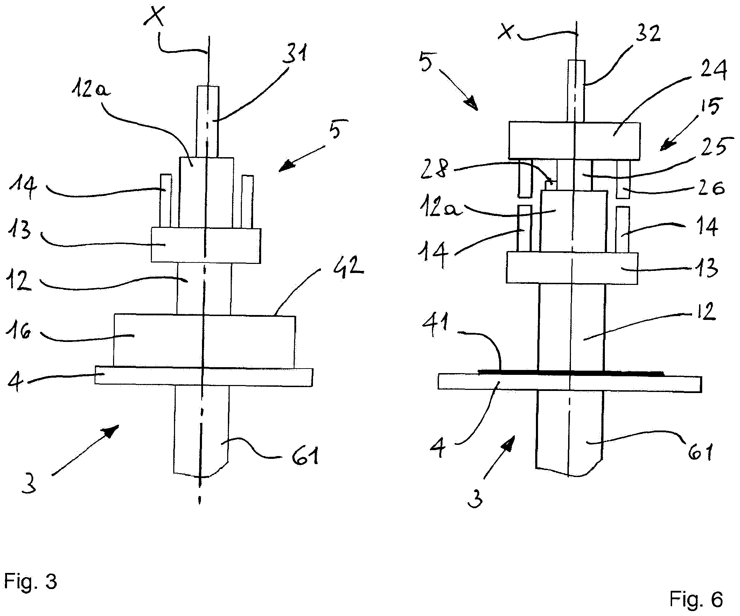

In the case of mounting/dismounting a rear kart tire on/from a respective rear wheel rim, thus having an external annular channel 101 with larger width, in the mounting configuration A, the inner annular edge 105 of the wheel rim 100 rest directly on a respective upper face 4a of the supporting plate 4 which is provided with a respective layer 41 of non-metallic material, for example plastic or rubber or the like, so as not to cause scratches, cuts, nicks on the wheel rim 100 (in particular on the inner annular edge 105 thereof), during the mounting/dismounting thereof on/from the supporting means 3 (figures 1 and 6).

In this case, an auxiliary connecting element 15 of the connecting means 5 is used to secure the rear wheel rim 100 to the supporting means 3, which allows the connection with the centring holes 110 and 111 of the central disc 108 of the wheel rim 100. In this case, in fact, since the depth of the external cavity is greater than that of the internal cavity of the front wheel rim, the centring pin 12 and the centring pegs 14 would not be able to reach the central disc 108 and insert into the centring holes 110 and 111 of the latter.

The auxiliary connecting element 15, intended to be inserted in the mounting configuration A in the external cavity 106, is configured to couple to both the centring holes 110 and the fixing holes 111 of the central disc 108 and the centring pin 12 so as to position the rear wheel rim correctly and aligned with the rotation axis X and transfer the rotation torque imparted to the supporting means 3 by the driving means 6.

In detail and with particular reference to figures 6 to 8, the auxiliary connecting element 15 comprises a main body 24 to which a central pin 25 is fixed and arranged to couple to the free end 12a of the centring pin 12, through the centring hole 110 of the central disc 108, and a plurality of further centring pegs 26 that are provided in a peripheral portion of the main body and can be inserted into the fixing holes 111.

The central pin 25 is parallel and coaxial to the rotation axis X and the further centring pegs 26 are fixed to the main body 24 parallel to the rotation axis X. The number of further centring pegs 26 and the angular distance thereof are equal to number and angular distance of fixing holes 111 of the central disc 108.

In the illustrated embodiment, a free end of the central pin 25 is inserted into an open cavity 12b of the free end 12a of the centring pin 12; the transmission of the rotational torque between the two pins 12, 25 is ensured by a shape coupling, for example by a key 28.

The connecting means 5 further comprise a supporting pin 31, 32 associable and aligned with the centring pin 12 and protruding from a passage hole provided in the covering element 10 to facilitate the dismounting of the tire 200 from the wheel rim 100.

In the case of a front wheel rim 100 mounted on the spacer ring 16 and with the centring pin 12 and centring pegs 14 inserted in the centring holes 110 and fixing holes 111 of the central disc 108, the supporting pin 31 is coupled to the free end 12a of the centring pin 12 and more precisely is partially inserted into the open cavity 12b of the free end 12a of the centring pin.

In the case of a rear wheel rim resting directly on the supporting plate 4 and with the auxiliary connecting element 15 coupled by means of the central pin 25 and the further centring pegs 26 to the centring holes 110 and 111 of the central disc 108, the centring pin 32 is fixed to the main body 24 of the auxiliary connecting element 15 on the opposite side of the central pin 25.

With particular reference to figure 1, the arm 8 is U-shaped and comprises a first hollow tubular portion 38, substantially vertical, namely parallel to the rotation axis X, which includes the first end 18 and is configured to receive internally, in a rotatable and sliding manner, a first vertical section 39a of a second U-shaped portion 39 of the arm 8. The second portion 39 further includes a second vertical section 39b provided with the second end 19, which supports the introducer element 9. A third substantially horizontal section 39c of the second portion 39 connects the two vertical sections 39a, 39b.

The introducer element 9 can thus be moved manually by the operator, rotationally and vertically so as to be brought near to or away from the wheel rim 100, in the different operating steps, as better explained below.

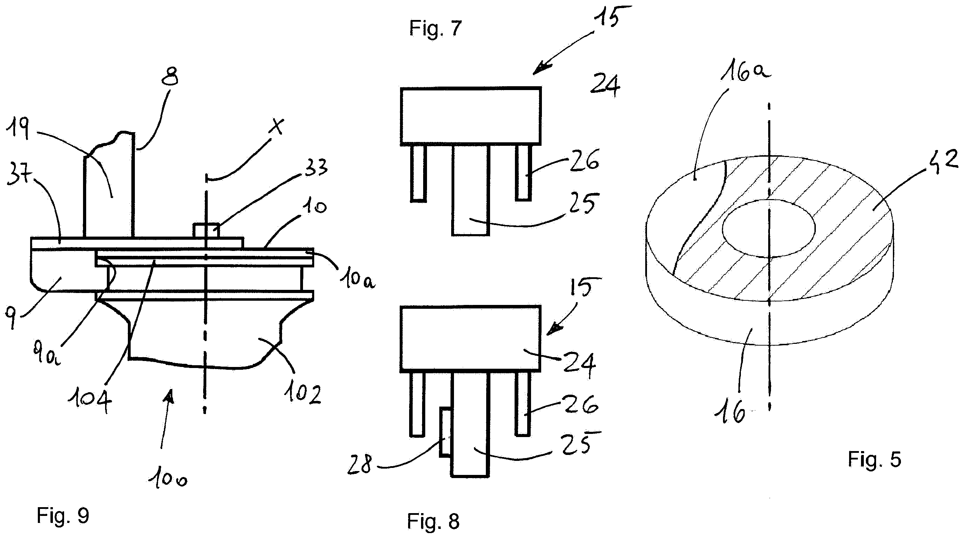

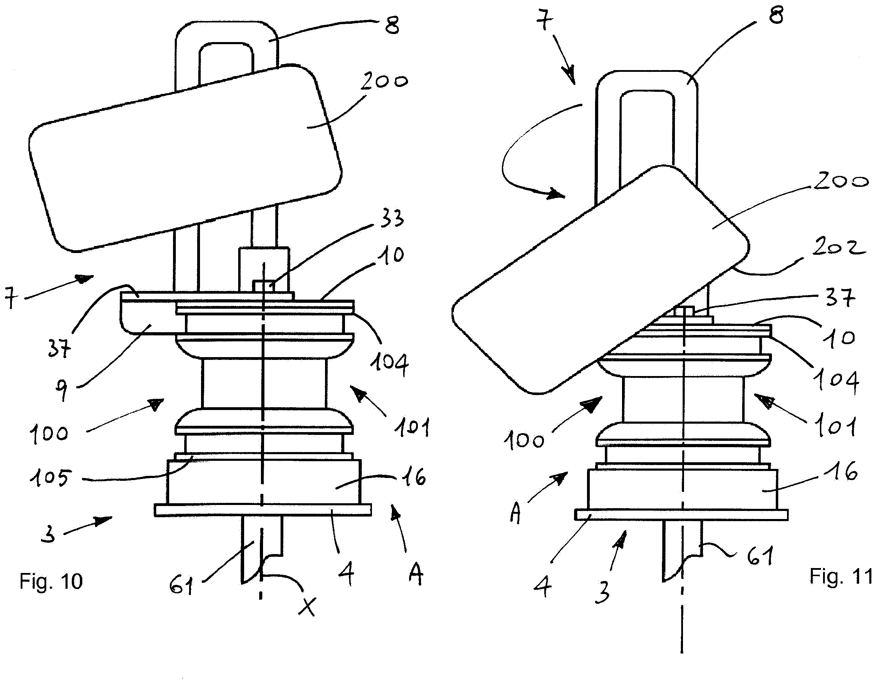

The introducer element 9, in particular a contact portion 9a thereof, is shaped (figures 9 and 10) so as to abut and slidably engage the external annular edge 104 of the wheel rim 100 in a mounting procedure of the tire 100 and is fixed to the second end 19 of the arm 8 by means of a plate 37.

More precisely, the contact portion 9a of the introducer element 9 has a complementary shape to that of the external annular edge 104 and the external side wall 102 of the wheel rim 100, so as to abut a portion of defined angular width of said external annular edge 104 and external side wall 102.

The plate 37 is connectable to the covering element 10, in particular by means of a fixing pin 33, so as to block the introducer element 9 in a settle position with respect to the wheel rim 100 in the mounting procedure of the tire 200.

More in detail, the plate 37 comprises an outer part to which the introducer element 9 is fixed below and an opposite inner part provided with a hole 37a for the passage of the fixing pin 33.

The driving means 6 comprise, for example, an electric motor 60 powered by an electric battery (not shown), for example at a voltage of 12 or 24 V, that can be mounted on the supporting base 2 or directly by an electrical mains and a speed reducer 62 driven by the electric motor 60 and provided with a vertical output shaft 61 connected to, and supporting, the supporting means 3.

In the illustrated embodiment, the electric motor 60 and the speed reducer 62 are integrated into a single unit (gearmotor). Alternatively, the electric motor may be directly connected to the supporting means 3.

The driving means 6, i.e. the electric motor 60, are activable in order to rotate the supporting means 3, via a pedal button operated by an operator during the mounting and dismounting procedures of the tire 200.

In the procedure for mounting/dismounting a tire 200 on/from a respective wheel rim 100 the operation of the portable tire changer system 50 of the invention comprises the steps described below, manually performed by an operator or user. Said steps coincide with the steps of the method of the invention for mounting/dismounting a tire 200 on/from a respective wheel rim 100 using the portable tire changer system 50 described above.

In the procedure of mounting a tire, in an initial step it is provided to position a wheel rim 100 on the supporting plate 4 of the supporting means 3 of the portable tire changer apparatus 1 so that the connecting means 5 are inserted in an internal cavity 107 of the wheel rim 100 so as to engage the centring and fixing holes 110, 111 of the central disc 108 of the wheel rim 100, the central disc 108 allowing the wheel rim to be fixed to a kart wheel hub.

In a following step, the covering element 10, in particular made of plastic with low friction coefficient, is positioned on the external annular edge 104 of the wheel rim 100, this external annular edge 104 being opposite the supporting plate 4 on which the wheel rim 100 rests with the inner annular edge 105.

It is then provided to move the arm 8 of the mounting means 7 in order to position the introducer element 9, made of plastic and fixed to the second end 19 of the arm 8, so as to abut the external annular edge 104. For this purpose, the contact portion 9a of the introducer element 9 is shaped so as to abut the external annular edge 104 and the external side wall 102 of the wheel rim 100.

The introducer element 9 is then connected to the covering element 10, in particular by connecting thereto the plate 37 by means of the fixing pin 33.

At this point, a tire 200 is partially inserted in the wheel rim 100, positioning a portion of an internal bead 202 of the tire 200 under the introducer element 9.

The supporting means 3 and the wheel rim 100 are rotated by the driving means 6 about the rotation axis X so that the introducer element 9 can guide and progressively and completely insert the internal bead 202 of the tire 200 under the external annular edge 104 inside the external annular channel 101 of the wheel rim 100.

Once the rotation of the supporting means 3 has stopped, a portion of the external bead 201 of the tire 200 is arranged under the introducer element 9.

The supporting means 3 and the wheel rim 100 are rotated by the driving means 6 about the rotation axis X so that the introducer element 9 can guide and progressively and completely insert the external bead 201 of the tire 200 under the external annular edge 104 thus inserting the tire 100 with both beads 201, 202 entirely inside the external annular channel 101.

It is therefore provided to move the arm 8 of the mounting means 7 so as to detach and remove the introducer element 9 from the wheel rim 100 having the tire 200.

In the case of a wider wheel rim, i.e. a rear wheel rim for a rear kart tire, after positioning the wheel rim 100 on the supporting plate 4 it is provided to insert an auxiliary connecting element 15 of the connecting means 5 into an external cavity 106 of the wheel rim 100 so that a central pin 25 of the auxiliary connecting element 15 is connected, through the centring hole 110 of the central disc 108, to the centring pin 12 of the connecting means 5 and further centring pegs 26 of the auxiliary connecting element 15 are inserted in the fixing holes 111 of the central disc 108, so that the supporting means 3 can rotate the wheel rim 100 about the rotation axis X.

Differently, in the case of a wheel rim 100 of smaller width, i.e. a front wheel rim for a front kart tire, before having positioned the wheel rim 100 on the supporting plate 4 it is provided to position on the latter a spacer ring 16 which can be inserted in the centring pin 12 of connecting means 5 and is arranged to abut and support the inner annular edge 105 of the wheel rim 100 with a respective upper face 16a provided with a respective layer 42 made of non-metallic material, in particular plastic or rubber or the like.

In the procedure of dismounting a tire 200 from the respective wheel rim 100 an initial step is provided wherein the wheel rim 100 is positioned on the supporting plate 4 of the rotatable supporting means 3 so that the connecting means 5 are inserted into the internal cavity 107 of the wheel rim 100 so as to engage the centring and fixing holes 110, 111 of the central disc 108.

The plastic covering element 10 is then positioned on the external annular edge 104 of the wheel rim 100 which is opposite the supporting plate 4.

It is then provided to associate a supporting pin 31; 32 with the connecting means 5; the supporting pin 31; 32 protrudes from the passage hole 11 of the covering element 10.

In the next step, the end of the working lever 70 is inserted inside the tire 200 and lifts a portion of an external bead 201 of the tire out of and above the external annular edge 104 of the wheel rim 100, using the covering element 10 as a fulcrum, i.e., without contacting any part of the wheel rim 100.

The supporting means 3 with the wheel rim 100 are rotated about the vertical rotation axis X so as to completely remove the external bead 201 of the tire 200 from the wheel rim 100, in particular from the external channel 101, also using the supporting pin 31; 32 on which the tire 200 rests.

It is then provided to stop the rotation of the supporting means 3 and to insert the end of the working lever 70 inside the tire 200 so as to lift a portion of an internal bead 202 of the latter outside and above the external annular edge 104.

The supporting means 3 with the wheel rim 100 are rotated about the vertical rotation axis X so as to completely remove the internal bead 202 from the external channel 101 and thus the tire from the wheel rim 100.

Also in the dismounting procedure, in the case of a rear wheel rim provided with a rear kart tire, after positioning the wheel rim 100 directly on the supporting plate 4 it is provided to insert the auxiliary connecting element 15 of the connecting means 5 into the external cavity 106 of the wheel rim 100 so that the central pin 25 and the further centring pegs 26 of the auxiliary connecting element 15 engage respectively the centring pin 12 of connecting means 5 and the fixing holes 111 of central disc 108 to allow the supporting means 3 to rotate the wheel rim with the tire about the rotation axis X.

Differently, in the case of a front wheel rim 100 for a front kart tire 200, before positioning the wheel rim 100 on the supporting plate 4 it is provided to position on the latter the spacer ring 16 on which the wheel rim 100 rests.

Thanks to the portable tire changer system 50 of the invention, it is therefore possible to dismount/mount a front or rear tire 200 for a kart wheel from/on the respective wheel rim 100 in a simple and quick way, without the risk of damaging the wheel rim, and in particular without accidentally causing scratches, cuts, nicks on the wheel rim, which is made of light alloy, that could damage it not only aesthetically, but also functionally. During all the steps of the tire mounting/dismounting procedures, the wheel rim 100 does not come into contact with metal surfaces or hard materials which could mark or scratch it. In the mounting configuration A, the wheel rim 100 in fact rests on a respective upper face 4a of the supporting plate 4 (rear wheel rim) or on an upper face 16a of the spacer ring 16 (front wheel rim), both upper faces 4a, 16a being provided with respective layers 41, 42 of non-metallic material, for example plastic or rubber or the like, which prevent the formation of scratches, cuts, nicks on the wheel rim 100 (in particular on the inner annular edge 105 thereof), during the mounting/dismounting procedures of the wheel rim on/from the supporting means 3.

In the mounting procedure of the tire 200, the external annular edge 104 of the wheel rim 100 is abutted and slidably engaged during the rotation thereof about the rotation axis X only by the introducer element 9 which is made of non-metallic material, in particular plastic with low friction coefficient.

Similarly, in the dismounting procedure of the tire 200, thanks to the covering element 10, which is positioned above the external annular edge 104, the latter does not come into contact with the working lever 70 when the lever is inserted inside the tire 200 in order to lift and remove the external and internal beads 201, 202 from the wheel rim 100. In fact, during the rotation of the wheel rim the lever 70 is slidably supported by the covering element 10 whose upper peripheral portion acts as a fulcrum in lifting of the beads 201, 202.

By avoiding any contact of the lever 70 with the external edge 104 of the wheel rim 100, the wheel rim is prevented from being damaged, for example deformed, this compromising the pressure seal of the tire.

Thanks to the driving means 6 which rotates the supporting means 3, i.e. the wheel rim 100, all the steps of the mounting/dismounting procedures of the tire are easy and quick and can be easily performed even by inexperienced persons.

The portable tire changer apparatus 1 of the invention which has a supporting base 2 on which the supporting means 3, the driving means 6 and the mounting means 7 are fixed is thus particularly compact and light, easy to transport and at the same time economical, robust and reliable.

## Claims

1. Portable tire changer system (50) for a kart tire (200) mounted on a metal wheel rim (100) comprising an annular external channel (101) that is formed by an external side wall (102) and an inner side wall (103), which have respectively an external annular edge (104) and an inner annular edge (105) capable to engage airtightly respective beads (201, 202) of a tire (200), and forms an external cavity (106) and an internal cavity (107) separated by a central disc (108) for fixing to a kart wheel hub, said system (50) comprising a portable tire changer apparatus (1) that includes:
- a supporting base (2);
- supporting means (3) fixed to said supporting base (2), rotatable about an rotation axis (X) and comprising a supporting plate (4), which has a respective upper face (4a) provided with a respective layer (41) of non-metallic material, in particular plastic or rubber, and arranged for supporting said wheel rim (100) on the inner annular edge (105) thereof, and connecting means (5) projecting from said supporting plate (4) along said rotation axis (X) and configured to be inserted into said internal cavity (107) of said wheel rim (100) so as to engage centring and fixing holes (110, 111) of said central disc (108) in a mounting configuration (A) of said wheel rim (100) on said portable tire changer apparatus (1);
said portable tire changer system (50) being **characterized in that** it further comprises a covering element (10), in particular made of plastic, and a working lever (70), said covering element (10) being configured to engage and cover at least said external annular edge (104) of said wheel rim (100) so as to prevent said working lever (70) used for removing a tire (200) from said wheel rim (100) during a dismounting procedure to contact directly said external annular edge (104), and **in that** said portable tire changer apparatus (1) comprises:
- driving means (6) fixed to said supporting base (2) and arranged to rotate said supporting means (3) about said rotation axis (X); and
- mounting means (7) comprising an arm (8), movable and having a first end (18) fixed to said supporting base (2) and a second end (19) movable, and an introducer element (9) fixed to said second end, made of non-metallic material, in particular plastic, and configured to abut said external annular edge (104) of said wheel rim (100) in a mounting procedure in order to allow inserting and mounting a tire (200) on said wheel rim (100) by rotating said supporting means (3).

2. Portable tire changer system (50) according to claim 1, wherein said connecting means (5) of said portable tire changer apparatus (1) comprises a centring pin (12) fixed to said supporting plate (4) and arranged to be inserted in a centring hole (110) of said central disc (108) of said wheel rim (100), and a centring ring (13) inserted in, and fixed to, said centring pin (12) and provided with a plurality of centring pegs (14) arranged to be inserted in respective fixing holes (111) of said central disc (108) in said mounting configuration (A).

3. Portable tire changer system (50) according to claim 2, wherein said connecting means (5) further comprises an auxiliary connecting element (15) which can be inserted into an external cavity (106), in particular of a wheel rim having an external channel of greater width, in particular for a rear kart wheel, said auxiliary connecting element (15) comprising a main body (24) to which a central pin (25) is fixed that is suitable to couple with a free end (12a) of said centring pin (12) through said centring hole (110) and provided with further centring pegs (26) which can be inserted in said fixing holes (111) of said central disc (108).

4. Portable tire changer system (50) according to claim 2 or 3, wherein said supporting means (3) of said portable tire changer apparatus (1) comprises a spacer ring (16) which can be inserted in said centring pin (12) resting on said supporting plate (4) in order to support an external annular edge (104), in particular of a wheel rim (100) having an external channel (101) of smaller width, in particular for a front kart wheel, said spacer ring (16) comprising a respective upper face (16a) suitable to abut said wheel rim (100) and provided with a respective layer (42) made of non-metallic material, in particular plastic or rubber.

5. Portable tire changer system (50) according to any of claims 2 to 4, wherein said connecting means (5) further comprises a supporting pin (31; 32) associable and aligned with said centring pin (12) and protruding from a passage hole (11) of said covering element (10) to facilitate dismounting the tire (200) from the wheel rim (100).

6. Portable tire changer system (50) according to claim 5, wherein said supporting pin (31) can be coupled with a free end (12a) of said centring pin (12).

7. Portable tire changer system (50) according to claim 5 or 6, as claim 5 is appended to claim 3, wherein said centring pin (32) can be coupled with said main body (24) of said auxiliary connecting element (15).

8. Portable tire changer system (50) according to any preceding claim, wherein said arm (8) is "U" shaped and comprises a first hollow tubular portion (38), which is substantially vertical, includes said first end (18) and is configured to receive rotatably and slidably a first vertical section (39a) of a U-shaped second portion (39) of said arm (8), a second vertical section (39b) of said second portion (39) comprising said second end (19) supporting said introducer element (9).

9. Portable tire changer system (50) according to claim 8, wherein said introducer element (9) is shaped so as to engage said external annular edge (104) and is fixed to said second end (19) of said arm (8) by means of a plate (37), the latter being connectable to said covering element (10), in particular by means of a fixing pin (33), so as to lock said introducer element (9) in a defined position with respect to said wheel rim (100) in a dismounting procedure.

10. Portable tire changer system (50) according to any preceding claim, wherein said driving means (6) comprise an electric motor (60) powered by a battery that can be installed on said supporting base (2) and a speed reducer (62 ) actuated by said electric motor (60) and provided with a vertical output shaft (61) connected to and supporting said supporting means (3), in particular said actuating means (6) being activable in order to rotate said supporting means (3) via a pedal button operated by an operator during the mounting and dismounting procedures.

11. Method for mounting a tire (200) on a respective wheel rim (100) using the portable tire changing system (50) according to any preceding claim, comprising the steps of:
- positioning said wheel rim (100) on a supporting plate (4) of rotatable supporting means (3) so that connecting means (5) thereof are inserted into an internal cavity (107) of said wheel rim (100) so as to engage centring and fixing holes (110, 111) of a central disc (108) of said wheel rim (100);
- positioning a covering element (10), in particular made of plastic, on an external annular edge (104) of said wheel rim (100);
- moving an arm (8) of mounting means (7) so as to position an introducer element (9) made of non-metallic material, in particular plastic, and fixed to a second end of said arm (8) against said external annular edge (104);
- connecting said introducer element (9) to said covering element (10);
- inserting said tire (200) partially inside said wheel rim (100) and positioning a portion of an internal bead (202) of said tire (200) under said introducer element (9);
- rotating said supporting means (3) with said wheel rim (100) about a rotation axis (X) so as to enable said introducer element (9) to guide and insert progressively and completely the internal bead (202) of said tire (200) under said external annular edge (104) inside an external channel (101) of said wheel rim (100);
- stopping rotating said supporting means (3) and positioning a portion of an external bead (201) of said tire (200) under said introducer element (9);
- rotating said supporting means (3) with said wheel rim (100) about a rotation axis (X) so as to enable said introducer element (9) to guide and insert progressively and completely said external bead (201) of said tire (200) under said external annular edge (104) and insert said tire (100) with both beads (201, 202) entirely inside said external channel (101);
- moving said arm (8) of mounting means (7) so as to detach and remove said introducer element (9) from said wheel rim (100) provided with tire (200).

12. Method for dismounting a tire (200) from a respective wheel rim (100) using the portable tire changer system (50) according to any of claims 1 to 10, comprising the steps of:
- positioning said wheel rim (100) on a supporting plate (4) of rotatable supporting means (3) so that connecting means (5) thereof are inserted into an internal cavity (107) of said wheel rim (100) so as to engage centring and fixing holes (110, 111) of a central disc (108) of said wheel rim (100);
- positioning a covering element (10), in particular made of plastic, on an external annular edge (104) of said wheel rim (100);
- associating a supporting pin (31; 32) with said connecting means (5), said supporting pin (31; 32) protruding from a passage hole (11) of said covering element (10);
- inserting an end of a working lever (70) inside said tire (200) and lifting a portion of an external bead (201) of said tire outside and above said external annular edge (104) using said covering element (10) as a fulcrum;
- rotating said supporting means (3) with said wheel rim (100) about a rotation axis (X) so as to completely remove said external bead (201) from the wheel rim (100) also using said supporting pin (31; 32 );
- stopping rotating said supporting means (3) and inserting the end of the working lever (70) inside said tire (200) and lifting a portion of an internal bead (202) of the tire outside and above said external annular edge (104);
- rotating said supporting means (3) with said wheel rim (100) about the rotation axis (X) so as to completely remove said internal bead (202) and thus said tire from the wheel rim (100).

13. Method according to claim 11 or 12, comprising, in particular in case of a wheel rim having an external channel of greater width, in particular for a rear kart wheel, after said positioning said wheel rim (100) on said supporting plate (4), inserting an auxiliary connecting element (15) of said connecting means (5) into an external cavity (106) of said wheel rim (100), said auxiliary connecting element (15) being provided with a central pin (25), configured to couple through a centring hole (110) of said central disc (108) with a centring pin (12) of said connecting means (5) that is fixed to said supporting plate (4), and provided with further centring pegs (26) which can be inserted in fixing holes (111) of said central disc (108).

14. Method according to claim 11 or 12, comprising, in particular in case of a wheel rim (100) having an external channel (101) of smaller width, in particular for a front kart wheel, before said positioning said wheel rim (100) on said supporting plate (4), positioning on this latter a spacer ring (16) which can be inserted in a centring pin (12) of said connecting means (5) and is arranged to support said inner annular edge (105) of said wheel rim (100) with a respective upper face (16a) provided with a respective layer (42) of non-metallic material, in particular plastic or rubber.

## Patentansprüche

1. Tragbares Reifenwechselsystem (50) für einen Kart-Reifen (200), der auf einer Metall-Radfelge (100) montiert ist, die einen ringförmigen äußeren Kanal (101) aufweist, der durch eine äußere Seitenwand (102) und eine innere Seitenwand (103) gebildet wird, die einen äußeren ringförmigen Rand (104) beziehungsweise einen inneren ringförmigen Rand (105) besitzen, die in der Lage sind, luftdicht mit entsprechenden Wülsten (201, 202) eines Reifens (200) in Eingriff zu stehen, und einen äußeren Hohlraum (106) und einen inneren Hohlraum (107) bildet, die durch eine zentrale Scheibe (108) zur Befestigung an einer Kart-Radnabe getrennt sind, wobei das System (50) eine tragbare Reifenwechselvorrichtung (1) aufweist, beinhaltend:
- eine Trägerbasis (2);
- Trägermittel (3), die an der Trägerbasis (2) befestigt sind, um eine Drehachse (X) drehbar sind und eine Trägerplatte (4), die eine entsprechende Oberseite (4a) besitzt, die mit einer entsprechenden Schicht (41) aus nichtmetallischem Material, insbesondere Kunststoff oder Gummi, versehen ist, und die so angeordnet ist, dass sie die Radfelge (100) an ihrem inneren ringförmigen Rand (105) trägt, und Verbindungsmittel (5), die von der Trägerplatte (4) entlang der Drehachse (X) vorstehen und so gestaltet sind, dass sie in den inneren Hohlraum (107) der Radfelge (100) eingeführt werden können, um in Zentrier- und Befestigungslöcher (110, 111) der zentralen Scheibe (108) in einer Montagekonfiguration (A) der Radfelge (100) auf der tragbaren Reifenwechselvorrichtung (1) einzugreifen, aufweisen;
wobei das tragbare Reifenwechselsystem (50) **dadurch gekennzeichnet ist, dass** es ferner ein Abdeckelement (10), insbesondere aus Kunststoff, und einen Arbeitshebel (70) aufweist, wobei das Abdeckelement (10) so ausgebildet ist, dass es mit mindestens dem äußeren ringförmigen Rand (104) der Radfelge (100) in Eingriff kommt und diesen abdeckt, um zu verhindern, dass der Arbeitshebel (70), der zum Entfernen eines Reifens (200) von der Radfelge (100) während eines Demontagevorgangs verwendet wird, den äußeren ringförmigen Rand (104) direkt berührt, und dadurch, dass die tragbare Reifenwechselvorrichtung (1) aufweist;
- Antriebsmittel (6), die an der Trägerbasis (2) befestigt und so angeordnet sind, dass sie die Trägermittel (3) um die Drehachse (X) drehen; und;
- Montagemittel (7), aufweisend einen Arm (8), der beweglich ist und ein erstes Ende (18), das an der Trägerbasis (2) befestigt ist, und ein zweites Ende (19), das beweglich ist, besitzt, und ein Einführelement (9), das an dem zweiten Ende befestigt ist, aus nichtmetallischem Material, insbesondere Kunststoff, hergestellt ist und so ausgebildet ist, dass es bei einem Montagevorgang an dem äußeren ringförmigen Rand (104) der Radfelge (100) anliegt, um das Einsetzen und Montieren eines Reifens (200) auf der Radfelge (100) durch Drehen der Trägermittel (3) zu ermöglichen.

2. Tragbares Reifenwechselsystem (50) nach Anspruch 1, wobei die Verbindungsmittel (5) der tragbaren Reifenwechselvorrichtung (1) einen Zentrierbolzen (12), der an der Trägerplatte (4) befestigt und so angeordnet ist, dass er in ein Zentrierloch (110) der zentralen Scheibe (108) der Radfelge (100) eingesetzt werden kann, und einen Zentrierring (13), der in den Zentrierbolzen (12) eingesetzt und daran befestigt ist und mit einer Mehrzahl von Zentrierstiften (14) versehen ist, die so angeordnet sind, dass sie in entsprechende Befestigungslöcher (111) der zentralen Scheibe (108) in der Montagekonfiguration (A) eingesetzt werden, aufweisen.

3. Tragbares Reifenwechselsystem (50) nach Anspruch 2, wobei die Verbindungsmittel (5) ferner ein Hilfsverbindungselement (15) aufweisen, das in einen äußeren Hohlraum (106), insbesondere einer Radfelge, die einen äußeren Kanal mit größerer Breite besitzt, insbesondere für ein Kart-Hinterrad, eingesetzt werden kann, wobei das Hilfsverbindungselement (15) einen Hauptkörper (24) aufweist, an dem ein zentraler Bolzen (25) befestigt ist, der geeignet ist, mit einem freien Ende (12a) des Zentrierbolzens (12) durch das Zentrierloch (110) zu koppeln, und mit weiteren Zentrierstiften (26) versehen ist, die in die Befestigungslöcher (111) der zentralen Scheibe (108) eingesetzt werden können.

4. Tragbares Reifenwechselsystem (50) nach Anspruch 2 oder 3, wobei die Trägermittel (3) der tragbaren Reifenwechselvorrichtung (1) einen Abstandsring (16) aufweisen, der in den auf der Trägerplatte (4) ruhenden Zentrierbolzen (12) eingesetzt werden kann, um einen äußeren ringförmigen Rand (104) zu tragen, insbesondere einer Radfelge (100), die einen äußeren Kanal (101) mit geringerer Breite besitzt, insbesondere für ein Kart-Vorderrad, wobei der Abstandsring (16) eine entsprechende Oberseite (16a) aufweist, die geeignet ist, an der Radfelge (100) anzuliegen, und mit einer entsprechenden Schicht (42) aus nichtmetallischem Material, insbesondere Kunststoff oder Gummi, versehen ist.

5. Tragbares Reifenwechselsystem (50) nach einem der Ansprüche 2 bis 4, wobei die Verbindungsmittel (5) ferner einen Trägerbolzen (31; 32) aufweisen, der mit dem Zentrierbolzen (12) verbindbar und auf diesen ausgerichtet ist und aus einem Durchgangsloch (11) des Abdeckelements (10) herausragt, um die Demontage des Reifens (200) von der Radfelge (100) zu erleichtern.

6. Tragbares Reifenwechselsystem (50) nach Anspruch 5, wobei der Trägerbolzen (31) mit einem freien Ende (12a) des Zentrierbolzens (12) gekoppelt werden kann.

7. Tragbares Reifenwechselsystem (50) nach Anspruch 5 oder 6, wenn Anspruch 5 auf Anspruch 3 bezogen wird, wobei der Zentrierbolzen (32) mit dem Hauptkörper (24) des Hilfsverbindungselements (15) gekoppelt werden kann.

8. Tragbares Reifenwechselsystem (50) nach einem der vorhergehenden Ansprüche, wobei der Arm (8) "U"-förmig ist und einen ersten hohlen rohrförmigen Abschnitt (38) aufweist, der im Wesentlichen vertikal ist, das erste Ende (18) enthält und so ausgebildet ist, dass er einen ersten vertikalen Bereich (39a) eines U-förmigen zweiten Abschnitts (39) des Arms (8) drehbar und verschiebbar aufnimmt, wobei ein zweiter vertikaler Bereich (39b) des zweiten Abschnitts (39) das zweite Ende (19) aufweist, das das Einführelement (9) trägt.

9. Tragbares Reifenwechselsystem (50) nach Anspruch 8, wobei das Einführelement (9) so geformt ist, dass es in den äußeren ringförmigen Rand (104) eingreift, und an dem zweiten Ende (19) des Arms (8) mittels einer Platte (37) befestigt ist, wobei letztere mit dem Abdeckelement (10) verbindbar ist, insbesondere mittels eines Befestigungsbolzens (33), um das Einführelement (9) in einer definierten Position in Bezug auf die Radfelge (100) bei einem Demontagevorgang zu verriegeln.

10. Tragbares Reifenwechselsystem (50) nach einem der vorhergehenden Ansprüche, wobei die Antriebsmittel (6) einen Elektromotor (60), der von einer Batterie angetrieben wird und der auf der Trägerbasis (2) installiert werden kann, und einen Drehzahlminderer (62) aufweisen, der von dem Elektromotor (60) betätigt wird und mit einer vertikalen Ausgangswelle (61) versehen ist, die mit den Trägermitteln (3) verbunden ist und diese trägt, wobei insbesondere die Betätigungsmittel (6) über eine Fußtaste, die von einem Bediener während des Montage- und Demontagevorgangs betätigt wird, aktiviert werden können, um die Trägermittel (3) zu drehen.

11. Verfahren zum Montieren eines Reifens (200) auf eine entsprechende Radfelge (100) unter Verwendung des tragbaren Reifenwechselsystems (50) nach einem der vorhergehenden Ansprüche, aufweisend die Schritte:
- Positionieren der Radfelge (100) auf einer Trägerplatte (4) drehbarer Trägermittel (3), so dass Verbindungsmittel (5) dieser in einen inneren Hohlraum (107) der Radfelge (100) eingeführt werden, um in Zentrier- und Befestigungslöcher (110, 111) einer zentralen Scheibe (108) der Radfelge (100) einzugreifen;
- Positionierung eines Abdeckelements (10), insbesondere aus Kunststoff, auf einem äußeren ringförmigen Rand (104) der Radfelge (100);
- Bewegen eines Arms (8) von Montagemitteln (7), um ein Einführelement (9) aus nichtmetallischem Material, insbesondere aus Kunststoff, das an einem zweiten Ende des Arms (8) befestigt ist, gegen den äußeren ringförmigen Rand (104) zu positionieren;
- Verbindung des Einführelement s (9) mit dem Abdeckelement (10);
- Einsetzen des Reifens (200) teilweise in die Radfelge (100) und Positionieren eines Teils eines inneren Wulstes (202) des Reifens (200) unter dem Einführelement (9);
- Drehen der Trägermittel (3) mit der Radfelge (100) um eine Drehachse (X), um es dem Einführelement (9) zu ermöglichen, den inneren Wulst (202) des Reifens (200) schrittweise und vollständig unter den äußeren ringförmigen Rand (104) in einen äußeren Kanal (101) der Radfelge (100) zu leiten und einzuführen;
- Anhalten des Drehens der Trägermittel (3) und Positionieren eines Teils eines äußeren Wulstes (201) des Reifens (200) unter dem Einführelement (9);
- Drehen der Trägermittel (3) mit der Radfelge (100) um eine Drehachse (X), um es dem Einführelement (9) zu ermöglichen, den äußeren Wulst (201) des Reifens (200) schrittweise und vollständig unter den äußeren ringförmigen Rand (104) zu leiten und einzuführen und den Reifen (100) mit beiden Wülsten (201, 202) vollständig in den äußeren Kanal (101) einzuführen;
- Bewegen des Arms (8) von Montagemitteln (7), um das Einführelement (9) von der mit einem Reifen (200) versehenen Radfelge (100) zu lösen und zu entfernen.

12. Verfahren zum Demontieren eines Reifens (200) von einer entsprechenden Radfelge (100) unter Verwendung des tragbaren Reifenwechselsystem (50) nach einem der Ansprüche 1 bis 10, aufweisend die Schritte:
- Positionieren der Radfelge (100) auf einer Trägerplatte (4) drehbarer Trägermittel (3), so dass Verbindungsmittel (5) dieser in einen inneren Hohlraum (107) der Radfelge (100) eingeführt werden, um in Zentrier- und Befestigungslöcher (110, 111) einer zentralen Scheibe (108) der Radfelge (100) einzugreifen;
- Positionierung eines Abdeckelements (10), insbesondere aus Kunststoff, auf einem äußeren ringförmigen Rand (104) der Radfelge (100);
- Verbinden eines Trägerbolzens (31; 32) mit den Verbindungsmitteln (5), wobei der Trägerbolzen (31; 32) aus einem Durchgangsloch (11) des Abdeckelements (10) herausragt;
- Einführen eines Endes eines Arbeitshebels (70) in das Innere des Reifens (200) und Anheben eines Teils eines äußeren Wulstes (201) des Reifens außerhalb und oberhalb des äußeren ringförmigen Randes (104) unter Verwendung des Abdeckelements (10) als Stützpunkt;
- Drehen der Trägermittel (3) mit der Radfelge (100) um eine Drehachse (X), um den äußeren Wulst (201) vollständig von der Radfelge (100) zu entfernen, auch unter Verwendung des Trägerbolzens (31; 32);
- Anhalten des Drehens der Trägermittel (3) und Einführen des Endes des Arbeitshebels (70) in das Innere des Reifens (200) und Anheben eines Teils eines inneren Wulstes (202) des Reifens außerhalb und oberhalb des äußeren ringförmigen Randes (104);
- Drehen der Trägermittel (3) mit der Radfelge (100) um die Drehachse (X), um den inneren Wulst (202) und damit den Reifen vollständig von der Radfelge (100) zu entfernen.

13. Verfahren nach Anspruch 11 oder 12, aufweisend, insbesondere im Falle einer Radfelge, die einen äußeren Kanal mit größerer Breite besitzt, insbesondere für ein Kart-Hinterrad, nach dem Positionieren der Radfelge (100) auf der Trägerplatte (4), ein Einsetzen eines Hilfsverbindungselements (15) der Verbindungsmittel (5) in einen äußeren Hohlraum (106) der Radfelge (100), wobei das Hilfsverbindungselement (15) mit einem zentralen Bolzen (25) versehen ist, der so ausgebildet ist, dass er durch ein Zentrierloch (110) der zentralen Scheibe (108) mit einem Zentrierbolzen (12) der Verbindungsmittel (5) koppelt, der an der Trägerplatte (4) befestigt ist, und mit weiteren Zentrierstiften (26) versehen ist, die in Befestigungslöcher (111) der zentralen Scheibe (108) eingesetzt werden können.

14. Verfahren nach Anspruch 11 oder 12, aufweisend, insbesondere im Falle einer Radfelge (100), die einen äußeren Kanal (101) mit geringerer Breite besitzt, insbesondere für ein Kart-Vorderrad, vor dem Positionieren der Radfelge (100) auf der Trägerplatte (4), ein Positionieren eines Abstandsrings (16) auf dieser letzteren, der in einen Zentrierbolzen (12) der Verbindungsmittel (5) eingesetzt werden kann und so angeordnet ist, dass er den inneren ringförmigen Rand (105) der Radfelge (100) mit einer entsprechenden Oberseite (16a), die mit einer entsprechenden Schicht (42) aus nichtmetallischem Material, insbesondere Kunststoff oder Gummi, versehen ist, trägt.

## Revendications

1. Système portable de changement de pneu (50) pour un pneu de kart (200) monté sur une jante de roue en métal (100) comprenant un canal extérieur annulaire (101) qui est formé par une paroi latérale extérieure (102) et une paroi latérale intérieure (103), qui ont respectivement un bord annulaire extérieur (104) et un bord annulaire intérieur (105) capables de venir en prise de manière étanche à l'air avec des bourrelets respectifs (201, 202) d'un pneu (200), et forme une cavité extérieure (106) et une cavité intérieure (107) séparées par un disque central (108) destiné à la fixation à un moyeu de roue de kart, ledit système (50) comprenant un appareil portable de changement de pneu (1) qui comporte:
- une base de support (2) ;
- des moyens de support (3) fixés à ladite base de support (2), rotatifs autour d'un axe de rotation (X) et comprenant une plaque de support (4), qui a une face supérieure respective (4a) pourvue d'une couche respective (41) de matériau non métallique, en particulier en plastique ou en caoutchouc, et agencés pour supporter ladite jante de roue (100) sur le bord annulaire intérieur (105) de celle-ci, et des moyens de liaison (5) faisant saillie à partir de ladite plaque de support (4) le long dudit axe de rotation (X) et configurés pour être insérés dans ladite cavité intérieure (107) de ladite jante de roue (100) de manière à venir en prise avec des trous de centrage et de fixation (110, 111) dudit disque central (108) dans une configuration de montage (A) de ladite jante de roue (100) sur ledit appareil portable de changement de pneu (1) ;
ledit Système portable de changement de pneu (50) étant **caractérisé en ce qu'**il comprend en outre un élément de recouvrement (10), en particulier en plastique, et un levier de travail (70), ledit élément de recouvrement (10) étant configuré pour venir en prise avec au moins ledit bord annulaire extérieur (104) de ladite jante de roue (100) et recouvrir celui-ci de manière à empêcher ledit levier de travail (70) utilisé pour retirer un pneu (200) à partir de ladite jante de roue (100) pendant une procédure de démontage d'entrer directement en contact avec ledit bord annulaire extérieur (104), et **en ce que** ledit appareil portable de changement de pneus (1) comprend:
- des moyens d'entraînement (6) fixés à ladite base de support (2) et agencés pour mettre en rotation lesdits moyens de support (3) autour dudit axe de rotation (X) ; et
- des moyens de montage (7) comprenant un bras (8), mobile et ayant une première extrémité (18) fixée à ladite base de support (2) et une seconde extrémité (19) mobile, et un élément introducteur (9) fixé à ladite seconde extrémité, en un matériau non métallique, en particulier en plastique, et configuré pour venir en butée contre ledit bord annulaire extérieur (104) de ladite jante de roue (100) lors d'une procédure de montage afin d'autoriser l'insertion et le montage d'un pneu (200) sur ladite jante de roue (100) en mettant en rotation lesdits moyens de support (3).

2. Système portable de changement de pneu (50) selon la revendication 1, dans lequel lesdits moyens de liaison (5) dudit appareil portable de changement de pneu (1) comprennent une broche de centrage (12) fixée à ladite plaque de support (4) et agencée pour être insérée dans un trou de centrage (110) dudit disque central (108) de ladite jante de roue (100), et un anneau de centrage (13) inséré dans ladite broche de centrage (12) et fixé à celle-ci et pourvu d'une pluralité de chevilles de centrage (14) agencées pour être insérées dans des trous de fixation respectifs (111) dudit disque central (108) dans ladite configuration de montage (A).

3. Système portable de changement de pneu (50) selon la revendication 2, dans lequel lesdits moyens de liaison (5) comprennent en outre un élément de liaison auxiliaire (15) qui peut être inséré dans une cavité extérieure (106), en particulier d'une jante de roue ayant un canal extérieur de plus grande largeur, en particulier pour une roue de kart arrière, ledit élément de liaison auxiliaire (15) comprenant un corps principal (24) auquel est fixée une broche centrale (25) qui est appropriée pour se coupler à une extrémité libre (12a) de ladite broche de centrage (12) à travers ledit trou de centrage (110) et pourvu d'autres chevilles de centrage (26) qui peuvent être insérées dans lesdits trous de fixation (111) dudit disque central (108).

4. Système portable de changement de pneu (50) selon la revendication 2 ou 3, dans lequel lesdits moyens de support (3) dudit appareil portable de changement de pneu (1) comprennent une bague d'espacement (16) qui peut être insérée dans ladite broche de centrage (12) reposant sur ladite plaque de support (4) afin de supporter un bord annulaire extérieur (104), en particulier d'une jante de roue (100) ayant un canal extérieur (101) de plus petite largeur, en particulier pour une roue de kart avant, ladite bague d'espacement (16) comprenant une face supérieure respective (16a) appropriée pour venir en butée contre ladite jante de roue (100) et pourvue d'une couche respective (42) faite d'un matériau non métallique, en particulier en plastique ou en caoutchouc.

5. Système portable de changement de pneu (50) selon l'une quelconque des revendications 2 à 4, dans lequel lesdits moyens de liaison (5) comprennent en outre un axe de support (31; 32) associable et aligné avec ladite broche de centrage (12) et faisant saillie à partir d'un trou de passage (11) dudit élément de recouvrement (10) pour faciliter le démontage du pneu (200) à partir de la jante de roue (100).

6. Système portable de changement de pneu (50) selon la revendication 5, dans lequel ladite broche de support (31) peut être couplée à une extrémité libre (12a) de ladite broche de centrage (12).

7. Système portable de changement de pneu (50) selon la revendication 5 ou 6, telle que la revendication 5 est annexée à la revendication 3, dans lequel ladite broche de centrage (32) peut être couplée audit corps principal (24) dudit élément de liaison auxiliaire (15).

8. Système portable de changement de pneu (50) selon l'une quelconque des revendications précédentes, dans lequel ledit bras (8) est en forme de "U" et comprend une première partie tubulaire creuse (38), qui est sensiblement verticale, comporte ladite première extrémité (18) et est configuré pour recevoir de manière rotative et coulissante une première section verticale (39a) d'une seconde partie en forme de U (39) dudit bras (8), une seconde section verticale (39b) de ladite seconde partie (39) comprenant ladite seconde extrémité (19) supportant ledit élément introducteur (9).

9. Système portable de changement de pneu (50) selon la revendication 8, dans lequel ledit élément introducteur (9) est mis en forme de manière à venir en prise avec ledit bord annulaire extérieur (104) et est fixé à ladite seconde extrémité (19) dudit bras (8) au moyen d'une plaque (37), celle-ci pouvant être reliée audit élément de recouvrement (10), en particulier au moyen d'une broche de fixation (33), de manière à verrouiller ledit élément introducteur (9) dans une position définie par rapport à ladite jante de roue (100) dans une procédure de démontage.

10. Système portable de changement de pneu (50) selon l'une quelconque des revendications précédentes, dans lequel lesdits moyens d'entraînement (6) comprennent un moteur électrique (60) alimenté par une batterie pouvant être installée sur ladite base de support (2) et un réducteur de vitesse (62) actionné par ledit moteur électrique (60) et pourvu d'un arbre de sortie vertical (61) relié auxdits moyens de support (3) et supportant ceux-ci, en particulier lesdits moyens d'actionnement (6) étant activables afin de mettre en rotation lesdits moyens de support (3) au moyen d'un bouton de pédale opéré par un opérateur pendant les procédures de montage et de démontage.

11. Procédé de montage d'un pneu (200) sur une jante de roue respective (100) en utilisant le système portable de changement de pneu (50) selon une quelconque revendication précédente, comprenant les étapes consistant à :
- positionner ladite jante de roue (100) sur une plaque de support (4) des moyens de support rotatifs (3) de sorte que des moyens de liaison (5) de ceux-ci sont insérés dans une cavité intérieure (107) de ladite jante de roue (100) de manière à venir en prise avec des trous de centrage et de fixation (110, 111) d'un disque central (108) de ladite jante de roue (100) ;
- positionner un élément de recouvrement (10), en particulier en plastique, sur un bord annulaire extérieur (104) de ladite jante de roue (100) ;
- déplacer un bras (8) des moyens de montage (7) de manière à positionner un élément introducteur (9) en matériau non métallique, en particulier en plastique, et fixé à une seconde extrémité dudit bras (8) contre ledit bord annulaire extérieur (104) ;
- relier ledit élément introducteur (9) audit élément de recouvrement (10) ;
- insérer ledit pneu (200) partiellement à l'intérieur de ladite jante de roue (100) et positionner une partie d'un bourrelet intérieur (202) dudit pneu (200) sous ledit élément introducteur (9) ;
- mettre en rotation lesdits moyens de support (3) avec ladite jante de roue (100) autour d'un axe de rotation (X) de manière à permettre audit élément introducteur (9) de guider et d'insérer progressivement et complètement le bourrelet intérieur (202) dudit pneu (200) sous ledit bord annulaire extérieur (104) à l'intérieur d'un canal extérieur (101) de ladite jante de roue (100) ;
- arrêter la rotation desdits moyens de support (3) et positionner une partie d'un bourrelet extérieur (201) dudit pneu (200) sous ledit élément introducteur (9) ;
- mettre en rotation lesdits moyens de support (3) avec ladite jante de roue (100) autour d'un axe de rotation (X) de manière à permettre audit élément introducteur (9) de guider et d'insérer progressivement et complètement ledit bourrelet extérieur (201) dudit pneu (200) sous ledit bord annulaire extérieur (104) et insérer ledit pneu (100) avec les deux bourrelets (201, 202) entièrement à l'intérieur dudit canal extérieur (101) ;
- déplacer ledit bras (8) des moyens de montage (7) de manière à détacher et retirer ledit élément introducteur (9) de ladite jante de roue (100) pourvue de pneu (200).

12. Procédé de démontage d'un pneu (200) à partir d'une jante de roue respective (100) en utilisant le système portable de changement de pneu (50) selon l'une quelconque des revendications 1 à 10, comprenant les étapes consistant à:
- positionner ladite jante de roue (100) sur une plaque de support (4) des moyens de support rotatifs (3) de sorte que des moyens de liaison (5) de ceux-ci sont insérés dans une cavité intérieure (107) de ladite jante de roue (100) de manière à venir en prise avec des trous de centrage et de fixation (110, 111) d'un disque central (108) de ladite jante de roue (100) ;
- positionner un élément de recouvrement (10), en particulier en plastique, sur un bord annulaire extérieur (104) de ladite jante de roue (100) ;
- associer une broche de support (31 ; 32) auxdits moyens de liaison (5), ladite broche de support (31 ; 32) faisant saillie à partir d'un trou de passage (11) dudit élément de recouvrement (10) ;
- insérer une extrémité d'un levier de travail (70) à l'intérieur dudit pneu (200) et soulever une partie d'un bourrelet extérieur (201) dudit pneu à l'extérieur et au-dessus dudit bord annulaire extérieur (104) en utilisant ledit élément de recouvrement (10) comme point d'appui ;
- mettre en rotation lesdits moyens de support (3) avec ladite jante de roue (100) autour d'un axe de rotation (X) de manière à retirer complètement ledit bourrelet extérieur (201) à partir de la jante de roue (100) en utilisant également ladite broche de support (31 ; 32) ;
- arrêter la rotation desdits moyens de support (3) et insérer l'extrémité du levier de travail (70) à l'intérieur dudit pneu (200) et soulever une partie d'un bourrelet intérieur (202) du pneu à l'extérieur et au-dessus dudit bord annulaire extérieur (104) ;
- mettre en rotation lesdits moyens de support (3) avec ladite jante de roue (100) autour de l'axe de rotation (X) de manière à retirer complètement ledit bourrelet intérieur (202) et ainsi ledit pneu de la jante de roue (100).

13. Procédé selon la revendication 11 ou 12, comprenant, en particulier en cas d'une jante de roue ayant un canal extérieur de plus grande largeur, en particulier pour une roue de kart arrière, après ledit positionnement de ladite jante de roue (100) sur ladite plaque d'appui (4), l'insertion d'un élément de liaison auxiliaire (15) desdits moyens de liaison (5) dans une cavité extérieure (106) de ladite jante de roue (100), ledit élément de liaison auxiliaire (15) étant pourvu d'une broche centrale (25), configurée pour se coupler à travers un trou de centrage (110) dudit disque central (108) avec une broche de centrage (12) desdits moyens de liaison (5) qui sont fixés à ladite plaque de support (4), et pourvus d'autres chevilles de centrage (26) qui peuvent être insérées dans des trous de fixation (111) dudit disque central (108).

14. Procédé selon la revendication 11 ou 12, comprenant, en particulier en cas d'une jante de roue (100) ayant un canal extérieur (101) de plus petite largeur, en particulier pour une roue de kart avant, avant ledit positionnement de ladite jante de roue (100) sur ladite plaque de support (4), le positionnement sur cette dernière une bague d'espacement (16) qui peut être insérée dans une broche de centrage (12) desdits moyens de liaison (5) et est agencée pour supporter ledit bord annulaire intérieur (105) de ladite jante de roue (100) avec une face supérieure respective (16a) pourvue d'une couche respective (42) de matériau non métallique, en particulier en plastique ou en caoutchouc.
